# EUROPEAN PATENT APPLICATION

(11) **EP 1 939 803 A2**
(43) Date of publication of application: **02.07.2008**
(21) Application number: 07024588.1
(22) Date of filing: 19.12.2007
(51) Int. Cl.: G06Q 30/00

(54) **Method and system to control advertising**

(30) Priority: 22.12.2006 US 615338
(71) Applicant: Nortel Networks Limited, St Laurent, Québec H4S 2A9 (CA)
(72) Inventor: Mckinnon, Steve J., Cary North Carolina 27511 (US); Ress, David P., Cary North Carolina 27511 (US)
(74) Representative: Boyce, Conor

(57) **Abstract**

Methods and systems for subscriber advertising control are disclosed. According to one method, a subscriber is allowed to control advertising content provided to the subscriber in association with program content intended to include advertising. Advertising control information is received from the subscriber. Selected content is identified to provide to the subscriber with the program content based upon the advertising control information. Delivery of the program content with the selected content to the subscriber is effected, wherein the selected content is delivered as part of the program content.

## Description

### Field of the Invention

The present invention relates to providing targeted advertising content to subscribers, and in particular to allowing the subscribers to control advertising.

### Background of the Invention

Conventional subscriber advertising primarily focuses on providing advertising content to subscribers during advertising slots located within regular commercial broadcast programming. These advertising slots are sold to generate revenue and are filled with advertising content that is chosen by a content owner or advertiser. This advertising content is developed based upon perceived subscriber preferences and is directed to broad categories of subscribers during the advertising slots.

Advertising slots are typically valued based upon popularity of the programs that are broadcast when the advertising slots are provided. For example, tournament sports and prime-time programming often justify larger advertising fees than non-prime-time programming. Advertisers choose advertising slots based upon projections of which types of subscribers will be viewing the programming when the selected advertising slot is provided. Advertisers spend very large sums of money to purchase advertising slots during programming that attracts subscribers that are potential purchasers of their products. The effectiveness of conventional advertising is often determined based upon sales of products that are advertised during advertising slots. This effectiveness is measured over time and may be speculative at best.

Both national and regional advertising slots are typically available to allow for both national and regional advertising during a majority of the broadcast programming that is offered to subscribers. As such, national advertisers, such as breakfast cereal producers, may select advertising slots that coincide with Saturday morning cartoons. Likewise, local advertisers, such as car dealerships, may select advertising slots during programs that are of local interest, such as the evening news. However, many potential advertising opportunities likely go unused because advertisers have advertising budgets that may prohibit selection of advertising slots that are too expensive or that are at times not historically associated with subscribers that would buy their products.

Accordingly, conventional advertising lacks both real-time subscriber feedback and misses many advertising opportunities that may otherwise exist. Furthermore, advertising dollars are most certainly spent ineffectively in certain situations when advertising slots are selected and yield no increase in sales for the advertiser. In addition, viewers of conventional advertising often are faced with viewing commercial advertising that is of no interest to them, such as a medicine commercial that culminates in a list of side effects that range from humorous to troubling.

Recently, with the advent of cable television (TV) and Internet protocol (IP) TV, mechanisms that are capable of directly determining which programs are selected by viewers have evolved. These mechanisms track selections, such as channel and program selections, made by viewers. These selections are collected and processed in an attempt to identify viewer preferences. These techniques for tracking user selections and attempting to identify subscriber preferences are called data mining. Data mining provides certain insights into viewer likes and viewing habits. However, data mining is purely passive in nature and does not take into account that viewers are still forced to receive commercial advertisements that are of no interest to them to view a programming selection of their choice. As such, the information derived from data mining is speculative in nature, subject to erroneous predictions, and still lacks direct input from a viewer.

Accordingly, methods and systems are needed to allow subscribers to directly select the amount and subject matter of commercial advertising that they receive. Furthermore, methods and systems are needed to allow subscribers to control commercial advertising based upon these selections.

### Summary of the Invention

The present invention allows subscribers of video and audio programming to control advertising content that is provided to them in association with program content that is intended to include some type of advertising content when delivered to the subscriber. Advertising control information is received from the subscriber. Based on the received advertising control information, selected ads are identified to be provided to the subscriber when the program content is delivered. Delivery of the program content with the selected ads to the subscriber is effected.

The advertising control information may be received from the subscriber in real time via a keystroke on a remote control or on the viewing terminal. Alternatively, the advertising control information may be pre-selected by the subscriber via a graphical user interface (GUI) or web page browser presented to the user on a personal computer (PC), television (TV), or personal digital assistant (PDA). A subscriber advertising profile is created and stored to preserve the advertising control information. The subscriber advertising profile may be modified as the subscriber's preferences change over time. The subscriber advertising profile may be stored within network-based equipment or within customer premise equipment (CPE).

Advertisements may be selected for delivery to the subscriber by comparing available advertisements with the subscriber's advertising profile or real-time selections regarding subscriber preferences. When a real-time selection is received from the subscriber, the available advertisements may be compared with the current TV channel, current program, or current advertisement. When a current advertisement is used for comparison, the product and genre may be used for comparison. Comparisons may further be based upon information that is associated with or extracted from the available advertisements. This information may be stored on a network server or may be stored in the form of metadata associated with the available advertisements.

The selected advertising content may be delivered to the subscriber during advertising slots that are identified within the program content. Advertising slots may be characterized as regional or national, and may be further characterized by duration. When a selected advertisement is matched with an advertising slot, such as by duration and regional characteristics, the selected advertisement is delivered to the subscriber in place of the previously selected advertisement for that advertising slot. As such, the subscriber may opt-in or opt-out of commercial advertising. The methods and systems described are well suited for systems, such as unicast/multicast and Internet protocol television (IP TV). For example, within a multicast environment, when advertising replacement is performed at a network level, a unicast stream may be established to deliver selected content to the subscriber. Additionally, when bundled advertising is selected by a subscriber, network storage may be implemented to adjust for timing and delay factors when the selected advertising or other selected content does not align with advertising slots or advertisements that are intended to be delivered in association with the program content.

In another alternative embodiment, incentives may be offered to subscribers in the form of reduced programming fees in exchange for increased or clustered advertising. Additionally, subscribers may choose to receive reduced or no advertising content in exchange for higher programming fees with the advertising content replaced with premium content, such as sports scores. Billing services track advertising and premium content.

In an alternative embodiment, advertisers may learn from these preferences and create advertising that appeals to subscribers. By providing advertisers with access to preferences created directly by subscribers, advertisers may refine marketing practices and receive more rapid feedback on advertising decisions.

### Brief Description of the Drawing Figures

The accompanying drawing figures incorporated in and forming a part of this specification illustrate several aspects of the invention, and together with the description serve to explain the principles of the invention.
FIGURE 1 is a block representation of a communication environment configured according to one embodiment of the present invention.
FIGURE 2 illustrates an exemplary process for allowing a subscriber to control delivery of advertising content according to one embodiment of the present invention.
FIGURE 3 illustrates an exemplary process by which a subscriber profile may be created or modified according to one embodiment of the present invention.
FIGURE 4 illustrates an exemplary process by which advertising content for a subscriber may be updated based upon a change in the subscriber profile according to one embodiment of the present invention.
FIGURE 5A illustrates a first portion of an exemplary advertising insertion process for inserting advertising content based upon a subscriber profile according to one embodiment of the present invention.
FIGURE 5B illustrates a second portion of the exemplary advertising insertion process for inserting advertising content based upon a subscriber profile according to one embodiment of the present invention.

### Detailed Description of the Preferred Embodiments

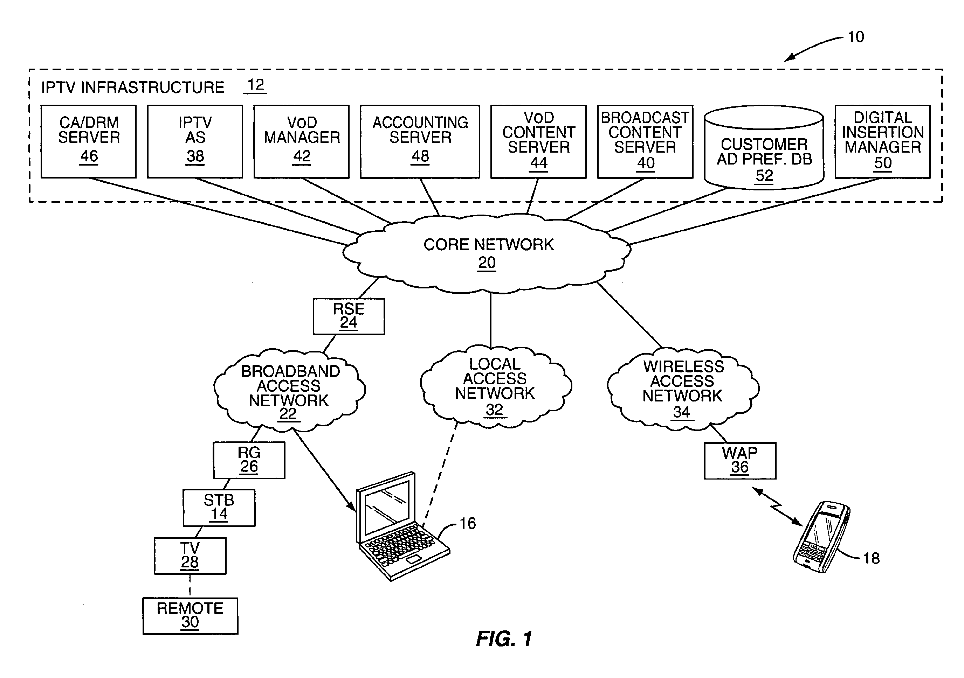

With reference to Figure 1, a communication environment 10 is provided wherein an Internet Protocol (IP) television (TV) infrastructure 12 functions to control the delivery of IPTV services to a set-top box (STB) 14 and personal computer (PC) 16, as well as a personal digital assistant (PDA) 18 over a core network 20. A multimedia subsystem infrastructure, such as an Internet multimedia subsystem (IMS) infrastructure, may also be present and used to facilitate signaling, but is not shown within Figure 1. European Application No. 07021799.7, "Multimedia Subsystem Control For Internet Protocol Based Television Services," illustrates signaling and messaging that may be used to facilitate certain of the communications described herein. A pre-IMS infrastructure may also be used to perform the functionality described herein.

IPTV services intended for the STB 14 may be provided via a broadband access network 22, such as a cable or digital subscriber line (DSL) network, which is coupled to the core network 20 via a residential services edge (RSE) 24, and to the STB 14 via a routing gateway (RG) 26 at the subscriber premises edge. The residential services edge 24 may be a Layer 3 edge device. Further, the RG 26 may include any necessary network address translation and firewall functions. In operation, IPTV sessions are established through the core network 20 from the IPTV infrastructure 12 under the control of an IMS infrastructure (not illustrated) or alternative infrastructure, and enable delivery of video content, which represents either broadcast or video-on-demand content, to the STB 14. The STB 14 can process the incoming video content and provide an appropriate signal to a TV 28 to enable the subscriber to view the desired video content.

The subscriber may use a remote 30 to interact with the TV 28 to select programming and to create advertising preference profiles, as will be described in more detail below. These advertising preference profiles may be created in real time via keypad selections on the remote 30, on the TV 28, or on the STB 14. Additionally, a graphical user interface (GUI) or web page may be accessed and viewed on any of the TV 28, the PC 16, or the PDA 18 to enable a subscriber to create and modify his/her advertising preference profile in a non-real-time fashion.

The PC 16 may be coupled to the core network 20 via the broadband access network 22, or via a local access network 32, depending on access and connectivity. Similarly, the PDA 18 may be coupled to the core network 20 through an appropriate wireless access network 34 and appropriate wireless access point (WAP) 36. In this illustration, the wireless access network 34 may include traditional wireless local area network (WLAN) or cellular infrastructures, which are capable of supporting packet-based communications. With either of the PC 16 or the PDA 18, the subscriber may receive video content through the access network currently supporting these devices. In operation, an overall IPTV session is established between the IPTV infrastructure 12 and a particular subscriber device, such as the STB 14, PC 16, or PDA 18, under the control of the IMS infrastructure (not shown). The established IPTV session provides the mechanism through which the video content is delivered to the appropriate subscriber device.

The IPTV infrastructure 12 includes an IPTV application server (AS) 38, which is an application server that is called by a call/session control function (CSCF) within an IMS infrastructure (both not shown) to control IPTV services. For broadcast IPTV services, the IPTV AS 38 may allow the various subscriber devices to receive video content from any number of broadcast channels that are provided by a broadcast content server 40. Broadcast channels in an IPTV service may be delivered through the core network 20 by means of an IP multi-cast function. The broadcast content server 40 should be understood to include functions for storing and re-generating broadcast channel content or functions for capturing broadcast content from an external source (not shown) and converting it to a format adapted to the communication environment 10. For video-on-demand (VoD), the IPTV AS 38 may cooperate with a VoD manager 42, which will control a VoD content server 44 to deliver video content to the subscriber device within a defined IPTV session. Notably, within a given IPTV broadcast session the subscriber may change broadcast channels, and within a given IPTV VoD session may control VoD content. The IPTV infrastructure 12 may also include a conditional access (CA) and digital rights management (DRM) server 46, as well as an accounting server 48. The CA/DRM server 46 provides content protection such as digital rights management and encryption, and may provide key management and distribution through rights objects which may be distributed via messages typically known in the art as entitlement management messages (EMMs) to the subscriber's devices to allow the video content to be decrypted or decoded. The accounting server 48 may be employed to provide accounting and billing functions for broadcast and VoD IPTV services, advertising selections, and viewing of advertising and premium content.

A digital insertion manager (DIM) 50 controls insertion of alternative advertising, premium content, and clustering of either content type, at the network level, as will be described in more detail below. Alternative advertising may include content, such as local, regional, and national advertising content, that is selected as an alternative to advertising that is intended to be included with a program. As such, a subscriber may select advertising related to the subscriber's favorite vehicle as an alternative to other advertising that is of little or no interest to the subscriber. Premium content may include content, such as sports scores or weather forecasts, that is selected as an alternative to advertising that is intended to be included with a program. As such, a subscriber may select informational or other resources as an alternative to other advertising that is of little or no interest to the subscriber. Clustering refers to a process by which certain original advertising slots that are intended to be distributed throughout a program are clustered sequentially together. This cluster may be placed within a continuous portion of the program to create a continuous stream of either the premium or alternative advertising content. Alternative content, premium content, and clustering of content may all be provided with payment incentives or premiums for the subscriber, as appropriate.

The DIM 50 stores advertising and premium content and subscriber profiles within a subscriber advertising preferences database 52. The subscriber advertising preferences database 52 may also be accessed by customer premise equipment (CPE) when a CPE device, such as any of the STB 14, the PC 16, and the PDA 18, are to perform the insertion and clustering of alternative advertising or premium content. Alternatively, the STB 14, the PC 16, and the PDA 18 may store alternative advertising, premium content, and subscriber profiles within local storage when they control the insertion and clustering of alternative advertising or premium content.

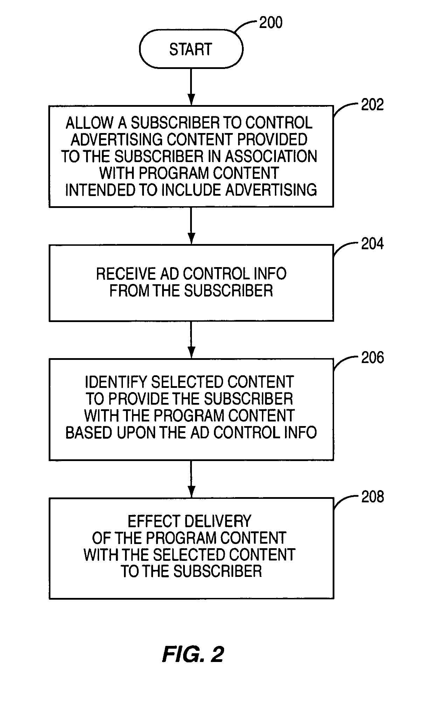

Figure 2 illustrates an exemplary process for allowing a subscriber to control delivery of advertising content. The process begins (step 200) and allows a subscriber to control advertising content provided to him/her in association with the program that is intended to include some type of advertising content (step 202). The process receives advertising control information from the subscriber (step 204) and identifies selected content, such as advertisements, to provide to the subscriber with the program content (step 206). The process then effects delivery of the program content with the selected content to the subscriber (step 208).

As such, the process of Figure 2 provides a high-level process by which a subscriber can control the advertising content that is provided to him/her by providing advertising control information that is used to identify ads to be delivered to him/her with the program content. Each of the steps of Figure 2 will be elaborated upon in the description of the figures that follow.

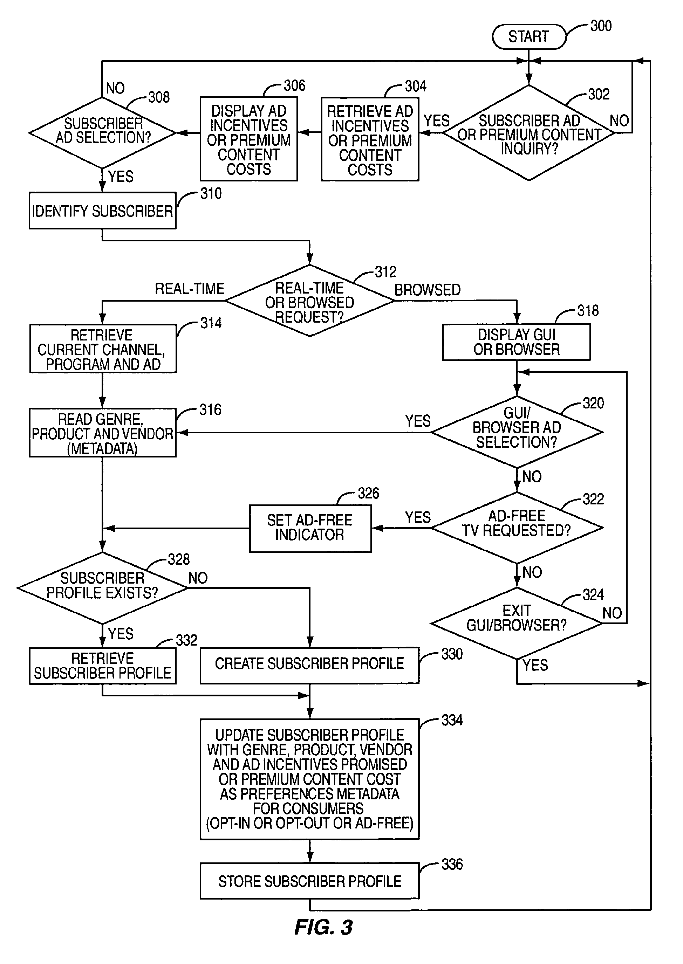

Figure 3 illustrates an exemplary process by which a subscriber profile may be created or modified. The exemplary process illustrated within Figure 3 may be executed within the DIM 50 at the network level or may be executed within the STB 14 at the CPE level. The process begins (step 300) and waits for a subscriber advertisement or premium content inquiry (decision point 302). The subscriber advertisement or premium content inquiry may be received in real time via a keystroke on a remote control, such as the remote 30, or via a keystroke on any of the TV 28, the STB 14, the PC 16, or the PDA 18. Alternatively, the subscriber advertisement or premium content inquiry may be received via a GUI that is executed on any of the viewing terminals, such as the TV 28, the PC 16, and the PDA 18. As another alternative, a webpage provided by the DIM 50 or another server may be accessed by any of the viewing terminals. In either of the GUI or webpage embodiments, the subscriber may browse available advertising options, as will be described in more detail below, to initiate a subscriber advertisement or premium content inquiry.

When a subscriber advertisement or premium content inquiry is received, the process retrieves advertisement incentives or premium content costs (step 304) and displays the advertisement incentives or premium content costs to the subscriber on one of the display terminals (step 306).

The subscriber may select the advertisement based upon the incentives or select the premium content based upon the costs. As such, the process determines whether the subscriber has made such a selection (decision point 308) and iterates to await a new subscriber advertisement or premium content inquiry (decision point 302) in the event that a selection is not made by the subscriber based upon the present inquiry. When the subscriber does make a selection based upon the advertising incentives or premium content and costs, the process identifies the subscriber (step 310). The subscriber identification may be used, as will be described in more detail below, to create or retrieve a subscriber profile that is associated with the subscriber.

The process determines whether the subscriber advertising or premium content inquiry was a real-time inquiry or a request for a browser interface (decision point 312). The real-time and browsed interfaces may provide different capabilities, as will be described in more detail below, and as such may be used in combination by a subscriber to create and enhance a subscriber advertising profile.

When the request has been determined to be a real-time request, the process retrieves the current channel, program, and advertisement if one is currently being delivered to the subscriber (step 314). The process reads genre, product, and vendor information associated with the current channel, program, and advertisement (step 316). As described above, this information may be stored within a network database, such as the subscriber advertising preferences database 52, or may be stored as metadata associated with the content that is currently being delivered to the subscriber. As such, the process retrieves the genre, product, and vendor information from the appropriate location.

When the request has been determined to be a browser request, the process displays the GUI or browser interface (step 318). The process then determines whether a GUI or browser advertising selection has been made (decision point 320). When an advertising selection has been made by the subscriber, the process may read the genre, product, and vendor information (step 316) as described above. When no advertising selection has been received, the process determines whether an advertising-free TV (ad-free TV) request has been received (decision point 322). When an ad-free TV request has not been received, the process makes a determination as to whether a request to exit the GUI or browser has been received (decision point 324). When a request to exit the GUI or browser interface has not been received, the process will iteratively wait for an advertising selection, an ad-free TV request, and an exit request. When a request to exit the GUI or browser has been received, the process returns to await a new subscriber advertising or premium content inquiry (decision point 302). When an ad-free TV request is received, the process sets an ad-free indicator (step 326).

When the ad-free indicator has been set (step 326) or when the genre, product, and vendor information has been read (step 316), the process determines whether a subscriber profile currently exists (decision point 328). When a subscriber profile does not exist, a subscriber profile is created (step 330) and when a profile does exist, the subscriber profile is retrieved (step 332). The process may retrieve or create the subscriber profile by use of the subscriber identification indicia identified and described above.

When the process has either retrieved or created the subscriber profile, the process updates the subscriber profile with genre, product, vendor, advertising incentives that have been promised, or premium content costs that have been provided as preferences for the subscriber (step 334). As described above, these preferences may indicate that the subscriber has decided to opt-in or opt-out of specific advertising and may also indicate that the user has selected ad-free TV. These preferences may use metadata or other information associated with the subscriber selections. The subscriber profile is then stored (step 336) and the process returns to await a new subscriber advertising or premium content inquiry (decision point 302).

As described above, signaling within a network system, such as communication environment 10, to facilitate advertising selections and content delivery is described in detail in European Patent Application No. 07021799.7.

In response to a subscriber profile creation or change, advertising information that is associated with the subscriber may be updated either with a new subscriber advertising preferences database 52 by the DIM 50 or by the STB 14. The determination as to which device updates advertising content based upon preferences of the subscriber may be made depending upon the capabilities of the respective device and network bandwidth capabilities for each.

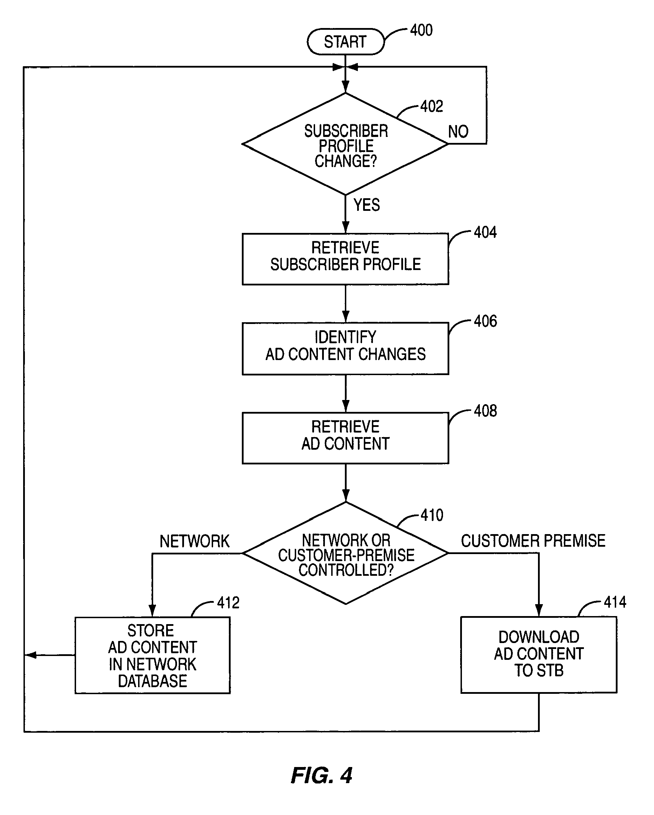

Figure 4 illustrates an exemplary process by which advertising content for a subscriber may be updated based upon a change in the subscriber profile. The process illustrated within Figure 4 may be executed on either the DIM 50 or the STB 14, as appropriate for the given network configuration. The process begins (step 400) and waits for a subscriber profile change (or creation) (decision point 402). As such, the process monitors subscriber profiles for any change that indicates that new advertising content is to be retrieved for the subscriber.

When a determination has been made that a subscriber profile has changed, the process retrieves the subscriber profile (step 404). The process then identifies advertising content changes (or is created) (step 406) and retrieves advertising content (step 408). The process then makes a determination as to whether advertising insertion is network or subscriber-premise controlled (decision point 410). When a determination has been made that insertion is to be network controlled, the retrieved advertisements are stored within a network advertisement content database, such as subscriber advertising preferences database 52 (step 412). When the determination has been made that subscriber premise equipment is to perform the advertising insertion, the advertising content is downloaded to the STB, such as STB 14, (step 414).

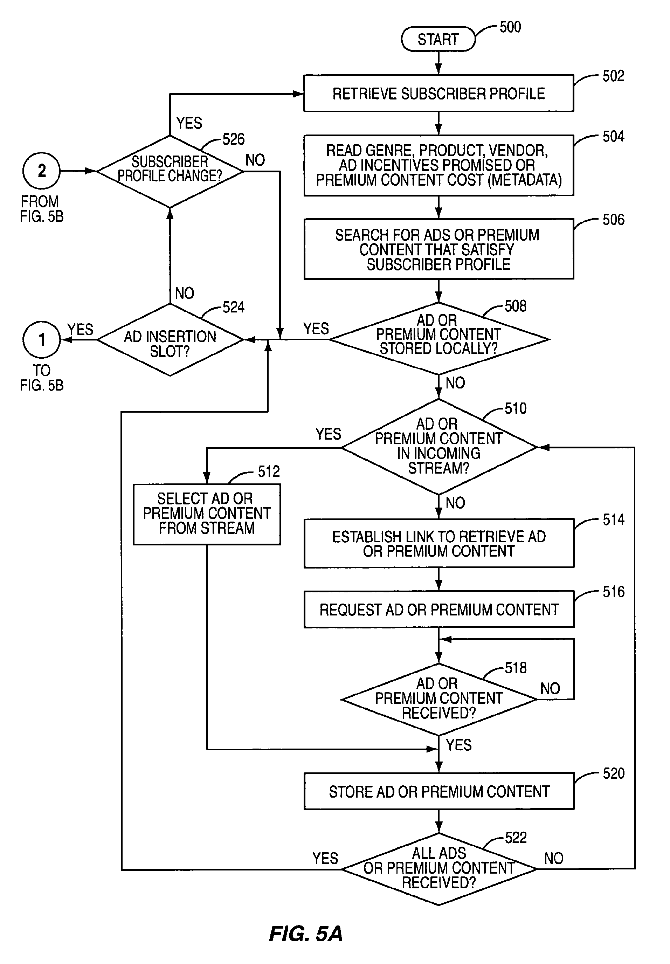

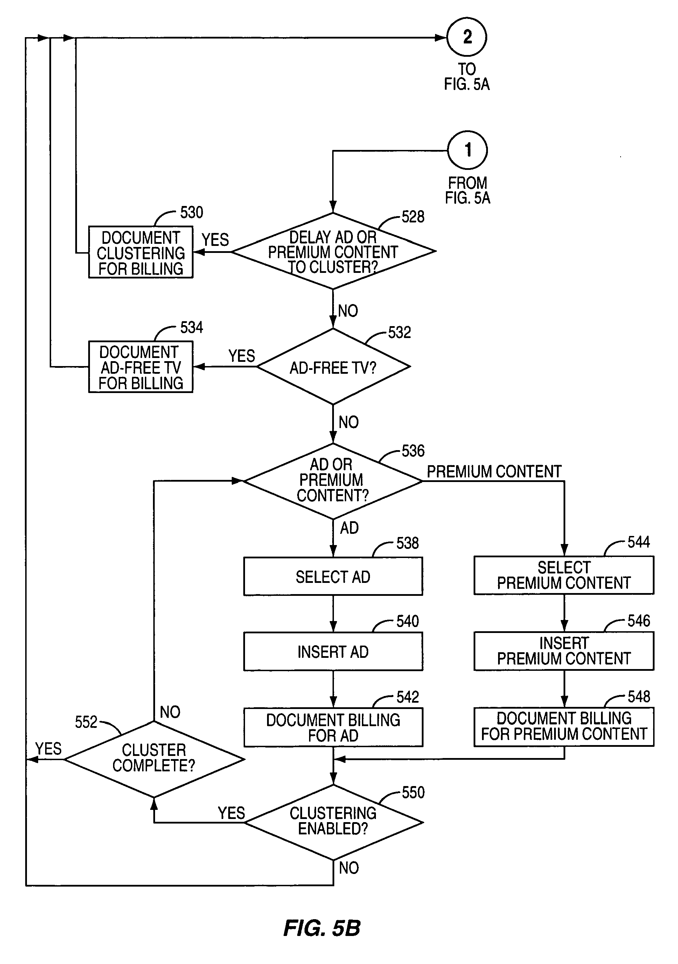

Figures 5A and 5B illustrate an exemplary advertising insertion process for inserting advertising content based upon a subscriber profile. The process illustrated in Figures 5A and 5B may be executed on a network device, such as the DIM 50 or on subscriber-premise equipment, such as the STB 14. As shown in Figure 5A, the process begins (step 500) and retrieves a subscriber profile (step 502). After retrieving the subscriber profile, the process reads genre, product, vendor, advertising incentives processed, and premium content costs provided to the subscriber and stored within the subscriber profile (step 504). As described above, the information stored within the subscriber profile may be stored in a form suitable for identifying advertising content, such as metadata.

The process then searches for advertisements or premium content that satisfy the subscriber profile (step 506). Within this exemplary embodiment, the process first searches to determine whether the advertisements or premium content are stored locally (decision point 508). As described above, an advertisement or premium content may be considered to be stored locally to the DIM 50 when it is stored within the subscriber advertising preferences database 52 and may be considered to be stored locally when it is stored within the STB 14, depending upon which device is performing the advertising insertion.

When a determination has been made that the advertising or premium content are not stored locally, the process makes the determination as to whether the content is available within the incoming stream of program and advertising content (decision point 510). When a determination has been made that the advertising or premium content is available within the incoming stream, the desired advertising or premium content is selected from the stream (step 512). When a determination has been made that the desired advertising or premium content is not within the incoming stream, the process establishes a link to retrieve the advertising or premium content (step 514) and issues a request for the desired advertising or premium content (step 516). The process then waits for the desired advertising or premium content to be received (decision point 518). For ease of illustration, Figure 5A does not illustrate error handling for a situation where the desired advertising or premium content is not received. Many error handling activities are possible and all are considerably within the scope of the subject matter described herein.

When the desired advertising or premium content has been received or when it has been selected from the incoming stream, the process stores the advertising or premium content (step 520). The advertising or premium content may be stored within the subscriber advertising preferences database 52 when the DIM 50 performs advertising insertion or may be stored within the STB 14 when the STB 14 performs advertising insertion.

The process makes the determination as to whether all of the desired advertising or premium content have been received (decision point 522). When additional advertising or premium content is desired, the process returns to make a determination as to whether the desired advertising or premium content is present within the incoming stream (decision point 510). The process then continues until all of the desired advertising or premium content have been received.

When all of the advertising or premium content have been received (decision point 522), or when the desired advertising or premium content are stored locally (decision point 508), the process makes a determination as to whether an advertising insertion slot is presently available (decision point 524). When an advertising insertion slot is not presently available, the process determines whether the subscriber profile has changed (decision point 526). When the subscriber profile has changed, the process retrieves the subscriber profile (step 502) and advertising or premium content, as described above. When a determination that the subscriber profile has not changed, the process iterates between searching for advertising insertion slots and making a determination as to whether the subscriber profile has changed.

When an advertising insertion slot is identified (decision point 524), as illustrated in Figure 5B, the process makes a determination based upon the subscriber profile as to whether to delay advertising or premium content in order to cluster either the advertising or premium content (decision point 528). When the subscriber profile indicates that the subscriber prefers to cluster the advertising or premium content, the process documents clustering for billing purposes (step 530) and returns to iteratively wait for advertising insertion slots and to check for subscriber profile changes. When a determination has been made not to delay the advertising or premium content in order to cluster the content, the process makes a determination as to whether the subscriber profile indicates that the subscriber desires to have ad-free TV (decision point 532). When a determination has been made that the subscriber profile indicates that the subscriber wishes to receive ad-free TV, the process documents the ad-free TV for billing purposes (step 534). When the subscriber profile does not indicate that ad-free TV has been requested, the process makes a determination as to whether to insert advertising or premium content (decision point 536).

When the process determines that advertising content is to be inserted, the process selects an advertisement (step 538) and inserts the advertisement (step 540). The process then documents the advertisement for billing purposes (step 542). When the process makes a determination that premium content is to be inserted, the process selects premium content (step 544) and inserts the premium content (step 546). The process then documents the premium content insertion for billing purposes (step 548).

The process then makes a determination as to whether clustering has been enabled within the subscriber profile (decision point 550). As described above, clustering may be enabled by a subscriber in order to receive a discount based upon an advertising incentive or in order to provide longer stretches of program content to shift the advertising content into clusters. When a determination has been made that clustering has been enabled by the subscriber within the subscriber profile, the process makes the determination as to whether the cluster is complete (decision point 552). When a determination has been made that the cluster has not been completed, the process returns to make a determination as to whether to insert an advertisement or a premium content (decision point 536) and continues as described above. When the process determines either that clustering is not enabled (decision point 550) or that clustering is complete (decision point 552) the process returns to iteratively check for subscriber profile changes and advertising insertion slots as described above.

## Claims

1. A method of subscriber advertising control comprising:
allowing a subscriber to control advertising content provided to the subscriber in association with program content intended to include advertising;
receiving advertising control information from the subscriber;
identifying selected content to provide to the subscriber with the program content based upon the advertising control information; and
effecting delivery of the program content with the selected content to the subscriber, wherein the selected content is delivered as part of the program content.

2. The method of claim 1 wherein effecting delivery of the program content with the selected content to the subscriber further comprises inserting the selected content within advertising slots associated with the program content.

3. The method of claim 2 wherein the advertising slots are selected from at least one of a group consisting of local, regional, and national advertising slots.

4. The method of claim 1 wherein the program content includes original advertising content and effecting delivery of the program content with the selected content to the subscriber further comprises replacing at least one of the original advertising content with the selected content.

5. The method of claim 1 wherein the program content comprises a plurality of original advertising slots distributed throughout the program content and further comprising modifying the program content such that the plurality of original advertising slots are clustered sequentially together during at least one continuous portion of the program content wherein the selected content is provided in the at least one continuous portion of the program content.

6. The method of claim 1 wherein the program content comprises a plurality of original advertising slots or advertisements and further comprising, prior to effecting delivery of the program content with the selected content to the subscriber, modifying the program content to remove at least certain of the original advertising slots or advertisements, wherein the program content is delivered to the subscriber without the at least certain of the original advertising slots or advertisements.

7. The method of claim 1 wherein the selected content includes one of: premium content, which is not the advertising, or alternative advertising content.

8. The method of claim 1 wherein receiving the advertising control information from the subscriber further comprises receiving the advertising control information in response to an action taken by the subscriber.

9. The method of claim 1 wherein the advertising control information further comprises at least one of a group consisting of genre, product, and vendor information.

10. The method of claim 1 wherein the advertising control information is metadata associated with the selected content and identifying the selected content further comprises identifying the selected content using the metadata.

11. The method of claim 1 wherein identifying the selected content further comprises identifying the selected content using the advertising control information within a subscriber advertising profile.

12. The method of claim 1 wherein the selected content is selected from one of a plurality of multicast streams.

13. The method of claim 1 further comprising retrieving the selected content from a remote source.

14. A system of subscriber advertising control comprising:
a subscriber terminal adapted to allow a subscriber to control advertising content provided to the subscriber in association with program content intended to include advertising;
a content insertion device adapted to:
receive advertising control information from the subscriber;
identify selected content to provide to the subscriber with the program content based upon the advertising control information; and
effect delivery of the program content with the selected content to the subscriber.

15. The system of claim 14 wherein the content insertion device further comprises a digital insertion manager (DIM) and is further adapted to identify the selected content in a network remote from customer-premise equipment (CPE).

16. The system of claim 14 wherein the content insertion device further comprises customer-premise equipment (CPE) and is further adapted to identify the selected content within the CPE.

17. A network providing subscriber advertising control comprising:
means for allowing a subscriber to control advertising content provided to the subscriber in association with program content intended to include advertising;
means for receiving advertising control information from the subscriber;
means for identifying selected content to provide to the subscriber with the program content based upon the advertising control information; and
means for effecting delivery of the program content with the selected content to the subscriber, wherein the selected content is delivered as part of the program content.
